# EUROPÄISCHE PATENTSCHRIFT

(11) **EP 1 712 120 B1**
(45) Veröffentlichungstag und Bekanntmachung des Hinweises auf die Patenterteilung: **09.04.2008**
(21) Anmeldenummer: 06112407.9
(22) Anmeldetag: 10.04.2006
(51) Int. Cl.: A01D 43/08

(54) **Auswurfkrümmer für einen Feldhäcksler**
Discharge spout for a forage harvester
Goulotte d'évacuation pour une faucheuse-hacheuse

(30) Priorität: 14.04.2005 DE 102005017121
(43) Veröffentlichungstag der Anmeldung: 18.10.2006
(73) Patentinhaber: Deere & Company, Moline, IL 61265-8098 (US)
(72) Erfinder: Kormann, Georg, Dr., 66482, Zweibrücken (DE)
(74) Vertreter: Holst, Sönke

(56) Entgegenhaltungen:
- DE-A1- 10 335 583
- DE-A1- 19 922 867
- US-A- 3 110 521
- US-A- 4 793 558

## Beschreibung

Die Erfindung betrifft einen Auswurfkrümmer für einen Feldhäcksler, mit einer äußeren Wand und zwei sich von der äußeren Wand fort erstreckenden seitlichen Wänden, die mit der äußeren Wand eine Begrenzung und Führung für einen vom Feldhäcksler ausgestoßenen Erntegutfluss bilden, sowie mit einer optischen Messeinrichtung zur Bestimmung der Inhaltsstoffe des Ernteguts, die durch eine Öffnung in der äußeren Wand mit dem Erntegut zusammenwirkt.

### Stand der Technik

Feldhäcksler werden in der Landwirtschaft verwendet, um Erntegut von einem Feld abzuschneiden oder aufzusammeln, mittels einer Häckseltrommel oder eines Scheibenradhäckslers zu häckseln und, in der Regel nach einer Beschleunigung mittels eines Gebläses, durch einen verstellbaren Auswurfkrümmer auf ein Transportfahrzeug auszutragen. Die geernteten Pflanzen werden in den meisten Fällen als Silage zum Verfüttern an Tiere verwendet.

Im Stand der Technik weist der Auswurfkrümmer aus Fertigungs- und Kostengründen einen rechteckigen Querschnitt auf und ist aus Stahl hergestellt (DE 102 11 706 A, DE 196 41 211 A). Bei kleineren Anbauhäckslern (DE 11 65 333 A) und stationären Heuförderern (DE 36 08 098 A) kamen auch runde Querschnitte des Auswurfkrümmers zum Einsatz.

Die Auswurfkrümmer mit rechteckigem Querschnitt zeigen bei geringen Durchsätzen ein streuendes Abwurfbild. Falls eine Messeinrichtung zur Bestimmung von Inhaltsstoffen im Erntegut, z. B. Wasser, die optisch im Nahinfrarotbereich arbeitet (s. DE 199 22 867 A), am Auswurfkrümmer angebracht ist, bildet sich bei den rechteckigen Auswurfkrümmern zumindest bei geringen Erntegutdurchsätzen eine für die Messeinrichtung ungünstige Materialflussausbildung. Es ist derzeit zur Untersuchung der Inhaltsstoffe mittels der Infrarotmesstechnik an dieser Stelle ein hoher Erntegutfluss erforderlich, weil sich das Erntegut stets auf die gesamte Breite des Auswurfkrümmers verteilt. Ein weiterer Nachteil der rechteckigen Auswurfkrümmer liegt darin, dass relativ hohe Belastungen auf die Seitenwände auftreten, so dass der Auswurfkrümmer relativ massiv und kostenaufwändig auszuführen ist.

In der DE 103 35 583 A wird ein Auswurfkrümmer vorgeschlagen, der über mindestens einen Teilbereich seiner Länge trapezförmig oder kurvenförmig ausgebildet ist. Dadurch soll vermieden werden, dass sich Erntegut am Boden und an den unteren Bereichen der seitlichen Wände des Auswurfkrümmers ansammelt und dort haften bleibt, da dort nur wenig Erntegut vorbeikommt, das eventuell anhaftendes Erntegut wieder entfernen würde. Durch die Trapezform breitet sich das Erntegut bei größeren Durchsätzen weiter in Richtung des Auswurfkrümmerbodens aus, so dass sich dort keine Ansammlungen von Erntegut bilden können.

### Aufgabe der Erfindung

Die der Erfindung zu Grunde liegende Aufgabe wird darin gesehen, einen verbesserten Auswurfkrümmer für einen Feldhäcksler bereitzustellen, der eine Erfassung der Inhaltsstoffe im Erntegut mittels einer optischen Messeinrichtung begünstigt.

Diese Aufgabe wird erfindungsgemäß durch die Lehre des Patentanspruchs 1 gelöst.

Der Auswurfkrümmer weist eine bezüglich der Bahn des vom Feldhäcksler abgegebenen Ernteguts radial äußere Wand und zwei sich an die äußere Wand anschließende seitliche Wände auf. Zwischen diesen Wänden wird das Erntegut geführt. Es wird vorgeschlagen, dass die seitlichen Wände zumindest im Bereich der der Öffnung für die optische Messeinrichtung benachbarten Teillänge zur äußeren Wand hin konvergieren. Der Querschnitt bzw. die Breite des Auswurfkrümmers verjüngt sich demnach zur äußeren Wand hin. Im Grenzfall können die seitlichen Wände direkt ineinander übergehen, so dass dann die äußere Wand eine verschwindend kleine Breite aufweist.

Auf diese Weise erreicht man, dass das Erntegut sich in der Nähe der äußeren Wand konzentriert. Dadurch kann man auch bei geringen Durchsätzen mit der dort angeordneten optischen Messeinrichtung Inhaltsstoffe und/oder andere Eigenschaften des Ernteguts unproblematisch erfassen. Durch die Konzentration des Ernteguts in der Nähe der äußeren Wand erzielt man ein konvergierendes Abwurfbild. Ein weiterer Vorteil des erfindungsgemäßen Auswurfkrümmers liegt darin, dass er bei gleicher Masse eine höhere Festigkeit als konventionelle, rechteckige Auswurfkrümmer aufweist oder leichter als diese dimensioniert werden kann.

Bezüglich der Form der Seitenwände bestehen im Rahmen des erfindungsgemäßen Gedankens verschiedene Möglichkeiten. In einer möglichen Ausführungsform verlaufen die seitlichen Wände und die äußere Wand entlang einer Parabel. In einer anderen Ausgestaltung verlaufen von der äußeren Wand beabstandete Abschnitte der seitlichen Wände rechtwinklig zur äußeren Wand, während sich gegenüber der äußeren Wand und den seitlichen Wänden im Winkel erstreckende Abschnitte der seitlichen Wände die äußere Wand mit den rechtwinklig zur äußeren Wand verlaufenden Abschnitten der seitlichen Wände verbinden. Es können auch beliebige Rundungen und/oder Schrägen miteinander kombiniert werden.

### Ausführungsbeispiele

In den Zeichnungen sind drei nachfolgend näher beschriebene Ausführungsbeispiele der Erfindung dargestellt. Es zeigt:
- Fig. 1: einen Feldhäcksler mit einem Auswurfkrümmer,
- Fig. 2: eine perspektivische Ansicht auf einen aufgeschnittenen Auswurfkrümmer nach einer ersten Ausführungsform der Erfindung,
- Fig. 3: eine perspektivische Ansicht auf einen aufgeschnittenen Auswurfkrümmer nach einer zweiten Ausführungsform der Erfindung, und
- Fig. 4: eine perspektivische Ansicht auf einen aufgeschnittenen Auswurfkrümmer nach einer dritten Ausführungsform der Erfindung.

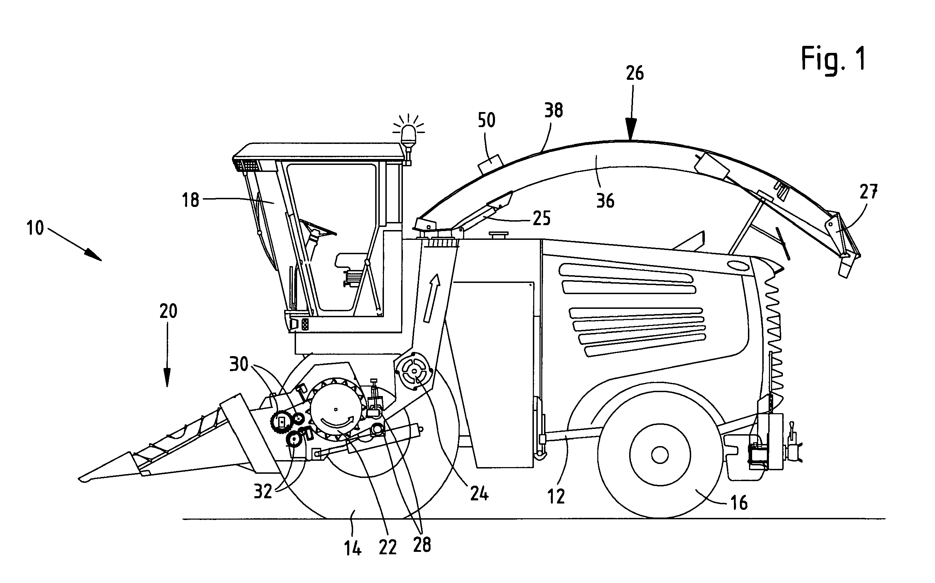

Ein in der Figur 1 gezeigter selbst fahrender Feldhäcksler 10 baut sich auf einem Rahmen 12 auf, der von angetriebenen vorderen Rädern 14 und lenkbaren rückwärtigen Rädern 16 getragen wird. Die Bedienung des Feldhäckslers 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Erntegut verlässt die Erntemaschine 10 zu einem nebenher fahrenden Anhänger über einen Auswurfkrümmer 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Der Auswurfkrümmer 26 kann an seinem stromauf liegenden Ende durch einen ersten Aktor um die Hochachse gedreht werden. Ein zweiter Aktor 25 erlaubt eine Höhenverstellung des Auswurfendes des Auswurfkrümmers 26 und ein dritter Aktor ermöglicht es, eine Auswurfklappe 27 zu verschwenken.

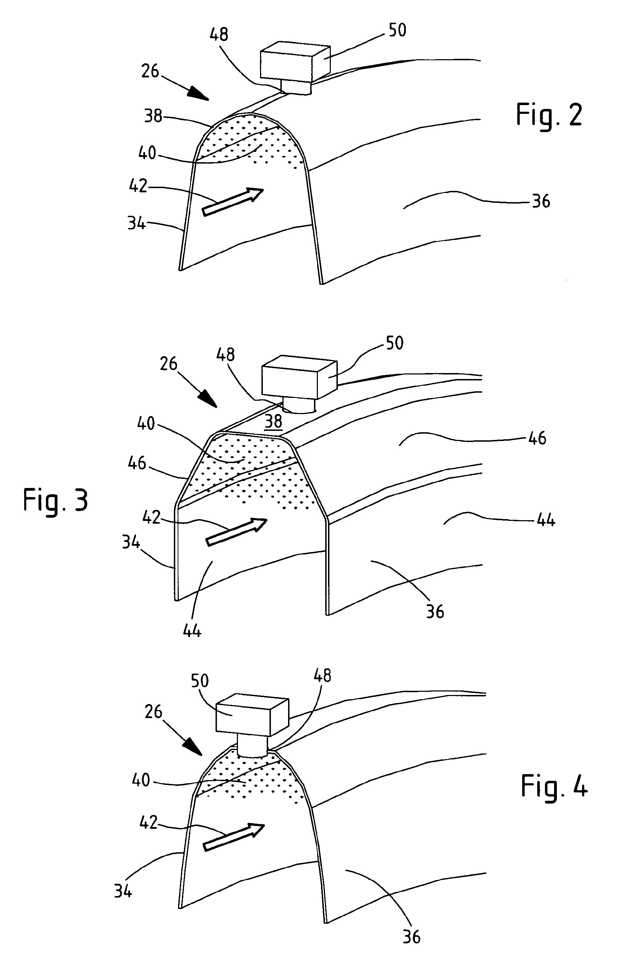

Die Figur 2 zeigt eine erste Ausführungsform eines erfindungsgemäßen Auswurfkrümmers 26 in aufgeschnittenem Zustand. Der Auswurfkrümmer 26 ist in Form einer umgedrehten Rinne gestaltet und umfasst seitliche Wände 34, 36, die durch eine verschwindend kurze äußere Wand 38 miteinander verbunden sind. Die Wände 34 - 38 sind in einer Parabelform angeordnet und nach unten hin offen, obwohl an den unteren Enden der seitlichen Wände 34, 36 auch sich quer zwischen den seitlichen Wänden 34, 36 erstreckende Stabilisierungselemente oder ein durchgehender Boden denkbar wären.

Eine zweite Ausführungsform eines Auswurfkrümmers 26 ist in der Figur 3 dargestellt, in der mit der ersten Ausführungsform übereinstimmende Elemente mit denselben Bezugszeichen versehen sind. Bei der Ausführungsform nach Figur 3 erstreckt sich die äußere Wand 38 in sich flach und quer zur Flussrichtung 42. Die seitlichen Wände 34, 36 umfassen jeweils einen unteren Abschnitt 44, der sich orthogonal zur äußeren Wand 38 erstreckt, und einen oberen Abschnitt 46, der sich im Winkel zum unteren Abschnitt 44 und zur äußeren Wand 38 erstreckt, so dass der obere Abschnitt 46 quasi eine abgeschrägte Ecke bildet.

Eine dritte Ausführungsform eines Auswurfkrümmers 26 ist in der Figur 4 dargestellt, in der mit der ersten Ausführungsform übereinstimmende Elemente mit denselben Bezugszeichen versehen sind. Bei der Ausführungsform nach Figur 4 erstreckt sich die äußere Wand 38 in sich flach und quer zur Flussrichtung 42. Die seitlichen Wände 34, 36 gehen bogenförmig in die äußere Wand 38 über, in der eine Öffnung 48 für eine Messeinrichtung 50 zur Erfassung der Inhaltsstoffe und/oder anderer Eigenschaften des Ernteguts 40 vorgesehen ist. Eine geeignete Messeinrichtung ist in der DE 199 22 867 A offenbart.

Für alle drei Ausführungsformen gilt, dass das in einer Flussrichtung 42 strömende, von der Fördervorrichtung 24 ausgeworfene Erntegut 40 beim Durchqueren des Auswurfkrümmers 26 entlang einer bogenförmig gekrümmten Bahn (s. Figur 1) läuft, so dass es sich aufgrund der Zentrifugalkraft in der Nähe der äußeren Wand 38 konzentriert. Durch die zur äußeren Wand konvergierenden Seitenwände 34, 36 des Auswurfkrümmers 26 bleibt die Breite des Erntegutflusses in der Nachbarschaft der äußeren Wand 38 relativ gering. Dadurch erhält man einen zentrierten Abwurf des Ernteguts 40 am Auswurfende des Auswurfkrümmers 26 und auch bei relativ geringen Durchsätzen eine brauchbare Messung mit der Messeinrichtung 50, die durch geeignete Öffnungen 48 in der äußeren Wand 38 in den Auswurfkrümmern 26 mit dem Erntegut zusammenwirkt. In der Öffnung 48 kann sich ein abriebfestes Fenster aus Diamant- oder Saphirglas befinden.

Weiterhin weist der erfindungsgemäße Auswurfkrümmer 26 eine höhere Festigkeit auf als die bisherigen, rechteckigen Ausführungsformen. Der Auswurfkrümmer 26 kann in einem Spritzguss- oder Strangziehverfahren aus Kunststoff hergestellt werden.

Die in den Figuren 2 bis 4 dargestellten Querschnitte können sich über die gesamte Länge des Auswurfkrümmers 26 oder zumindest über den der Messeinrichtung 50 benachbarten Teilbereich davon erstrecken.

## Patentansprüche

1. Auswurfkrümmer (26) für einen Feldhäcksler (10), mit einer äußeren Wand (38) und zwei sich von der äußeren Wand (38) fort erstreckenden seitlichen Wänden (34, 36), die mit der äußeren Wand (38) eine Begrenzung und Führung für einen vom Feldhäcksler (10) ausgestoßenen Erntegutfluss bilden, sowie mit einer optischen Messeinrichtung (50) zur Bestimmung der Inhaltsstoffe des Ernteguts, die durch eine Öffnung (48) in der äußeren Wand (38) mit dem Erntegut (40) zusammenwirkt, **dadurch gekennzeichnet, dass** die seitlichen Wände (34, 36) zumindest über den der Öffnung (48) benachbarten Teilbereich der Länge des Auswurfkrümmers (26) zur äußeren Wand (38) hin konvergieren.

## Claims

1. Discharge spout (26) for a forage harvester (10), with an outer wall (38) and two lateral walls (34, 36) which extend away from the outer wall (38) and, together with the outer wall (38), form a delimiting means and guide for a flow of harvested crop ejected by the forage harvester (10), and with an optical measuring device (50) for determining the content of the harvested crop, said measuring device interacting with the harvested crop (40) through an opening (48) in the outer wall (38), **characterized in that** the lateral walls (34, 36) converge towards the outer wall (38) at least over that subregion of the length of the discharge spout (26) which is adjacent to the opening (48).

## Revendications

1. Conduit de déversement courbe (26) pour une faucheuse-hacheuse (10), comportant une paroi extérieure (38) et deux parois latérales (34, 36), qui sont disposées en s'écartant de la paroi extérieure (38) et qui forment avec la paroi extérieure (38) une délimitation et un guidage pour un flux de végétaux récoltés déversés hors de la faucheuse-hacheuse (10), ainsi qu'un dispositif de mesure (50) optique, qui est destiné à déterminer les constituants des végétaux récoltés et qui coopère avec la masse végétale (40) à travers une ouverture (48) dans la paroi extérieure (38), **caractérisé en ce que** les parois latérales (34, 36) convergent vers la paroi extérieure (38) au moins sur une zone partielle, voisine de l'ouverture (48), de la longueur du conduit de déversement courbe (26).
